# EUROPEAN PATENT APPLICATION

(11) **EP 2 799 817 A2**
(43) Date of publication of application: **05.11.2014**
(21) Application number: 14165606.6
(22) Date of filing: 23.04.2014
(51) Int. Cl.: G01C 21/36

(54) **An apparatus and a method of providing information in relation to a point of interest to a user**

(30) Priority: 30.04.2013 EP 13165989
(71) Applicant: GN Store Nord A/S, 2750 Ballerup (DK)
(72) Inventor: Jensen, Jakob, 2650 Hvidovre (DK); Johansen, Lars Klint, 2500 Valby (DK)
(74) Representative: Inspicos A/S

(57) **Abstract**

An apparatus and a method of informing a user of a POI (point of interest) having a boundary, the method comprising providing information relating to the POI, while the user is outside the boundary and, when the user is inside the boundary, providing information to the user relating to positions of sub POIs inside the boundary. Preferably, when the user is inside the boundary, no information relating to POIs outside the boundary is provided, and when the user is outside the boundary, no information relating to sub POIs is provided.

## Description

The present invention relates to a system and a method of providing information to a user relating to a POI and in particular to a method and a system in which a POI has a boundary and where the information provided to the user differs when the user is inside and outside the boundary, respectively.

In general, GPS units and other guiding systems will adapt the information provided to different circumstances, such as the distance to the POI and the number of POIs or other types of information to be provided. Thus, when approaching an area with a high POI density, the individual POIs may become visible only when the distance is sufficiently small for the positions of individual POIs to be discernible.

Systems of this type may be seen in e.g.: US2004243307, US20090198767, EP1983302, US2007112510, WO2010105934, US2009055774, US2009315995, and US2007150189.

Other types of location or guiding systems may be seen in "Power Efficient Indoor/Outdoor Positioning Handover", Thomas Gallagher et al, 2011 Internal Conference on Indoor Positioning and Indoor Navigation (IPIN) 21-23 September, Guimarães, Portugal, "A Survey of Mobile Indoor Navigation Systems", Haosheng Huang and Georg Gartner, Cartography in Central and Eastern Europe, Lecture Notes in Geoinformation and Carthography, Berlin/Heidelberg, Springer pp 305-319, 2010 and "Seamless Indoor/Outdoor Postioning Handover for Location-Based Services in Streamspin", René Hansen et al, 2009 Tenth International Conference on Mobile Data Management Systems, Services and Middleware.

In a first aspect, the invention relates to a method of informing a user of a POI, the method comprising the steps of:
i. the user identifying the POI,
ii. POI information relating to the identified POI being accessed, the information comprising information describing a boundary of the POI and a location of each of one or more sub POI(s) within the boundary,
iii. determining a position of the user,
iv. when the determined position of the user is outside the boundary, providing first information to the user relating to the user's position vis-à-vis the POI,
v. when the determined position of the user is inside the boundary, providing second information to the user relating to the location(s) of the sub POI(s) inside the boundary
   wherein:
   - the first information does not comprise information relating to any sub POI(s)
   and
   - the second information does not comprise information relating to any POI(s).

In this context, a POI is a Point Of Interest and may be a coordinate, an address, a building, a place, a company, a city/town/village/farm/country, a part of a
city/town/village/farm/country, a road/street, a tourist attraction, a sports arena, a petrol station, a shop, a shopping centre, a port, an airport, a train station or the like.

The first and/or second information provided to the user may be any type of information, such as a position of the (sub) POI, a direction to the POI, a manner of getting to the POI, a distance to the POI, a time required to travel to the POI, a route to the POI, the presence of the POI, the existence of the POI, parameters or characteristics of the POI (such as a gas brand, shop brand or the like), POI name, as well as any of the above POI types etc.

The user may identify a POI in a multitude of manners. Available POIs may be represented in a list (visible or audible) from which the user may select one or more POIs. The list may be generated from POI names, distances, contents, types (amusement part, gas station, tourist attraction or the like), addresses, or the like.

Another manner of identifying a POI is to enter a position, address, location, coordinate, name, identification, type of the like.

Yet another manner may be to actually move/travel to the POI and identify it by the actual position of the user.

Yet another manner of identifying a POI may be to direct a field of interest toward the POI and select the POI as a POI present in the field of interest. The field of interest may be a field or area in front of the user or an element controllable by the user, such as a field of view of the user. Then, the user may, from his/her position and field of view, be able to identify a POI or reduce an actual number of POIs to a smaller number by only concerning oneself with those within the field of view/interest.

The POI information accessed may comprise the information provided to the user but may comprise additional information. One type of information relating to a POI is information useful for identifying a POI. Such information is exemplified further above. Another type of information is information useful for navigating to the POI. Also, information relating the location of one or more sub POI(s) inside boundary of the POI is provided.

In this context, a boundary is a, physical or imaginary, limit relating to a POI. Usually, a boundary will define an area, such as an area inside which the POI is positioned. This area may be illustrated if desired on a map of the POI and its surroundings. The area may be defined in any manner in relation to the physical extent of the POI.

This boundary/limit may be an outer contour of a building, city/town/village, sports arena or the like. Alternatively, the boundary/limit may be defined a predetermined distance from a boundary, wall, limit, opening, edge, border or the like of the POI.

Usually, the boundary may be described as a number of positions, coordinates or the like and/or curves/lines interconnecting such positions/coordinates.

The boundary/limit may optionally be defined individually for each POI. This boundary may be varying in size and shape and may e.g. be illustrated on a map over the POI and its surroundings as a, broken or unbroken, curve at or around the POI.

A boundary may be defined, if desired, only at entrances to a POI, such as at doors, doorways, roads or the like, or may be defined for all of a contour of the POI.

A sub POI is a position or the like within the boundary of a POI. The sub POI may be of the same type as a POI, and a sub POI may be defined, navigated to, searched for, identified, of the like in the same manner as a POI.

The sub POI is positioned within the boundary and thus has a position within this boundary. This position may be determined in a standard manner, such as using a GPS coordinate, a map or routing/navigation internally in a building, such as floor, room number, direction (north, south, etc.) or the like.

The accessing of the information may be the reading of information from an information/data storage, such as a local storage, a remote storage, a server or the like. The storage may be available locally or via a network, such as an intranet, a LAN, a WAN, the internet or the like. The information may be available or accessible from a single storage or from multiple stores.

The identification and/or accessing may be performed navigating through a search routine or browsing e.g. the internet for the POI or the information relating to the POI. If the identification routine comprises also identifying one or more sub POIs connected to the identified POI, the same type of identification may be performed if desired.

The position of a user may be determined in a variety of manners. Standard GPS technology is widely used outdoors, but also other technologies, such as triangulation between cell phone antennas and the like are used in e.g. cell phones for position determination thereof. Indoors, other types of navigation and position determination may be used, such as using localized beacons, LANs or the like.

The position may be determined in the form of a coordinate, an address, an altitude or the like.

The comparison of the position and the boundary may be a comparison of coordinates and thus may be quite simple.

The first information relating to the user's position vis-à-vis the POI may be information describing a direction toward, a distance to, a route to the POI or the like. As will be described below, this information may be provided visually and/or as audio information, for example. In one example, the first information may be an illustration of a map illustrating the position of the user and that of the POI as well as a path thereto or other elements which need to be navigated around to reach the POI.

The second information may also be provided visually and/or as audio information and may also be information relating to a direction to, distance to, route to the sub POI or the like.

The second information may relate to all sub POIs inside the boundary or a part thereof. The selection of any sub POIs may be performed in any manner, such as along the same lines as the initial identification of the POI.

Crossing the boundary thus changes between providing the first and the second information. The first information does not relate to any sub POI(s) but relates to POIs, and the second information relates to sub POI(s) but not POIs. Thus, the user is not provided with irrelevant information, as long as he/she is within the border. Preferably, no information is provided relating to anything positioned outside the boundary.

That the first information does not comprise information relating to any sub POIs means that the user hears or sees no information relating to the sub POIs, and vice versa for the second information.

Thus, a change in the information provided is seen when crossing the boundary.

In one embodiment, step iv. comprises providing information also relating to additional POIs to the user. This step then may comprise providing information to all POIs within a predetermined area around the identified POI and/or the position of the user. In some situations, the number of POIs may be desired reduced. Thus, it may be desired to provide information only to POIs in a direction of travel/viewing, along a route toward the identified POI, or only information of POIs of a predetermined type(s) may be provided.

In one preferred embodiment, step iv. and/or step v. comprises providing the first and/or second information visually on a display.

In this embodiment, at least in the first mode, a navigation system may be used, which illustrates, on the display, a map on which is indicated the determined position of the user and the identified POI. At least a part of a route leading to the POI, as well as the position of the user may also be provided, so that the user is able to navigate to the POI.

Naturally, the route may be left out and only a direction toward the POI may be provided, or the position of the user and a position of the POI (such as an entrance thereof) may be provided.

The POI may be illustrated in its entirety, or a part thereof may be illustrated, such as an entrance, a street address, a centre or the like.

In one embodiment, step v. comprises providing the second information as information relating to the determined position of the user vis-à-vis the location(s) of the sub POI(s). Then, this may also resemble a navigator illustrating the positions to the user so that the user may navigate to a selected sub POI.

In another preferred embodiment, step iv. and/or step v. comprises providing the information in the form of audio information. In this manner, the user may not need to direct his view and concentration toward a display but may be provided audio information, such as guidance information, while keeping his eyes on e.g. the road, traffic or the like.

A preferred manner of limiting the number of POIs and/or sub POIs for which information is provided is one which further comprises determining a direction of interest, and wherein step iv. and/or step v. comprises providing first and/or second information relating only to POI(s) or sub POI(s) within the field of interest.

The field of interest may be an area determined within a predetermined or selected distance from the user. Alternatively or additionally, the field of interest may be selected from a direction of viewing or direction of movement of a user or an element carried by the user, so that only POIs or sub POIs along the direction of viewing/movement, such as within a predetermined angular interval around the direction of view movement, are provided.

A second aspect of the invention relates to an apparatus for providing information relating to a POI to a user, the apparatus comprising:
- a storage holding information relating to one or more POIs and, for each POI, a boundary of the POI and a location of each of one or more sub POI(s) within the boundary,
- a position unit configured to determine its position,
- an input device configured to allow the user to select a POI,
- an information provider configured to operate in each of a first and a second mode wherein:
   - in the first mode, the determined position is outside the boundary, the information provider providing first information to the user relating to the determined position vis-à-vis the POI, the first information not comprising information relating to any sub POI(s),
   - in the second mode, the determined position is inside the boundary, the information provider providing second information to the user relating to the location(s) of the sub POI(s) inside the boundary, the second information not comprising information relating to any POI(s).

In this context, an apparatus may be a single, monolithic element or system or may be provided as a number of interconnected elements or elements configured to communicate with each other using wires or wireless communication.

The storage may be a local storage, such as a storage physically interconnected with e.g. the information provider. Alternatively, the storage may be a more remote storage with which the information provider or a processor may be configured to communicate, such as via a LAN, a WAN, the internet and using any desired protocol (e.g. IPv4, IPv6 or the like) and network (fx cell phone network, optical communication, radio communication, wireless communication, communication over wires).

The storage may be based on any type of storing technology, such as RAM, ROM, PROM, EPROM, EEPROM, hard disc, optical storage, flash disc, tape, floppy disc, SSD or the like.

Naturally, the storage may be a single storage or a number of individual storages from which different parts of the information may be accessed. Additional storages, such as servers on the internet, may be provided for, e.g., identifying the POI in the first place, such as during a standard browsing on the internet.

The information may be stored in the storage in any desired manner. The information relating to a POI may be any of the types of information described further above.

The position unit may be based on any type of position determination, such as GPS technology, triangulation, or the like. Usually, the position unit is attached to or forms part of the information provider, but this is not a requirement, the position unit may be separate therefrom and may be configured to output position information to the information provider.

The input device may be any type of input device, such as a keyboard, a rotatable knob, such as for navigating in lists, one or more push buttons, levers or the like, a mouse, a microphone, a tactile sensor, a vibration sensor, a rotation sensor, a pressure sensor, a touch screen/display, or the like. Naturally, a combination of such elements may be used.

As described above, the user may identify or select the POI in a number of manners and from a number of different types of information.

The information provider is configured to output or provide the first and the second information. This information may be visual, tactile and/or audio information, so the information provider may be any known type of information provider, such as a display, such as a flat panel display, a CRT and/or a touch display, a loudspeaker, a vibrating element, or the like. Naturally, a combination may be desired.

The providing of the first information may, as is described above, be performed in a number of manners, such as as visual information or audio signals.

The providing of the second information may be a providing of the same type of information (visual, audio, tactile) as the first information or another type of information.

In one embodiment, the information provider is configured to, in the first mode, provide additional information relating to additional POIs to the user. Usually, the first information and the additional information is provided in the same manner, such as on a display.

The apparatus may comprise a processor communicating with the storage (or communication elements via which the communication takes place), the information provider, the position unit and the input device and controls the information provider to provide the information desired. The processor may be any type of processor and may be software controlled or hardwired. Often, processors are formed by an ASIC, an FPGA or the like. The processor may be monolithic or constituted by a number of processing elements.

In a preferred embodiment, the information provider comprises a display, wherein the information provider is configured to, in the first mode, provide the first information visually on the display. In this situation, the information provider may be configured to, in the first mode, illustrate, on the display, a map on which is indicated the determined position and the identified POI. As mentioned above, the position of the POI may be an entrance, a street address, centre or the like.

In another preferred embodiment, the information provider is configured to provide the first and/or second information as audio information. In that situation, the information provider may comprise one or more loudspeakers.

In one situation, the information provider is configured to, in the second mode, provide the second information as information relating to the determined position vis-à-vis the location(s) of the sub POI(s). In that manner, the user may be guided toward or to the sub POI.

In one embodiment, the apparatus further comprises a sensor for determining a field of interest, and wherein the information provider is configured to provide first and/or second information relating to, such as only to, POI(s) and sub POI(s) within the field of interest. The field of interest may be an area determined or defined around a direction of movement and/or a direction of viewing of a user or a direction of a direction sensitive element of the sensor.

The field of interest may be delimited as an angular interval around a determined direction. Also the field of interest may be delimited by a maximum distance from the position of the position unit or a period of time estimated to reach the farthest boundary. This maximum distance may be determined from a velocity or speed determined from positions of the position unit. The higher the speed/velocity, the larger a maximum distance may be desired.

This sensor may form a part of the position unit, as two consecutive positions may describe a direction of movement.

Alternatively or in addition, the sensor may be fixed or attached to a head of a person in order to determine a direction of the head of the person. In that manner, the apparatus may be controlled to provide information only relating to POI(s) or sub POI(s) positioned in front of - or not far from the field of view of the person.

This sensor then may be a gyroscopic sensor, a magnetic sensor determining its direction based on the earth's magnetic field. Another type of sensor is an accelerometer.

In the following, preferred embodiments of the invention will be described with reference to the drawing, wherein:
- figure 1 illustrates a navigating apparatus according to a first embodiment of the invention,
- figure 2 illustrates a hardware set-up useful in the apparatus of figure 1,
- figure 3 illustrates the use of the apparatus according to figure 1 in the two modes of operation, and
- figure 4 illustrates a second embodiment of a system according to the invention.

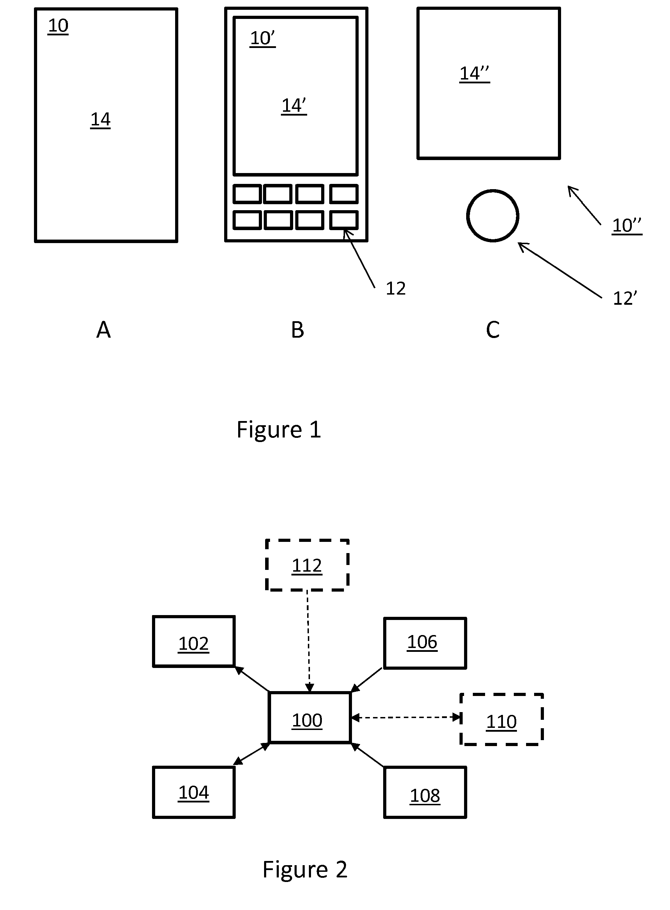

In figure 1, three different types of navigating elements are seen. In figure 1A, a navigator 10 is seen comprising a main display 14 being a touch display via which the user enters the instructions desired and from which the user receives position information and the like. This navigator 10 may have all usual components, as will be described further below. This type of navigator may be a smart phone, a tablet or the like, such as an iPhone®, an iPad® or the like.

In figure 1B, the navigator 10' comprises a display 14' which may be a touch display or a simple, e.g. LED, display, and which further comprises a number of buttons 12 via which the user will enter the information to be entered. This type of navigator may be a smart phone or a portable computer, for example.

In figure 1C, the navigator 10" comprises a display 14" which may be a touch display or a simple display and which further has a separate button 12' which may not be directly attached to the display 14". A navigator of this type may be seen in certain brands of cars where the navigating display 14" is positioned in the car's front console and the button 12' in the central console at the gear stick and hand brake.

In figure 2, a hardware set-up useful in any of the navigator types of figure 1 is illustrated in which a processor 100 is configured to receive position/location information from a GPS unit or other locator unit 106, access a storage unit 104, receive user inputs from an input device 108 and provide information to the user on a display 102.

The display may be of any of the usual display types as is also described with reference to figure 1, i.e. a touch display or a simple display. Naturally, these displays may be based on any of the known technologies, such as LED, LCD, OLED, or the like.

The display 102 may be replaced or accompanied by other elements suitable for providing information to a user, such as a loudspeaker or headset for providing audio instructions or information, tactile elements, such as vibrators or the like, for providing tactile instructions or information to the user.

The information to be provided to the user may be of multiple types. Often, information relating to a number of POIs may be provided for the user to select one, or information may be provided to the user for identifying this POI, such as an alphabet or a list of POIs. The POIs may be divided into groups, such as gas stations, entertainment, shopping, airports, or the like, so that the identification may be performed by selecting a group and then a POI from the group, using a selection from a list or the spelling of all of or part of the name or other identifier of the POI.

Another type of information may be browsing information received from an external source, such as via an antenna or network access element 110 via which an external data source, such as the WWW, may be browsed in order to identify the POI, its contents, sub-POI(s), its position, its boundary or the like.

Other types of information to be provided may be position information illustrating a map on which a position of a POI is illustrated. On the map, the position of the navigator 10 or the person may also be indicated.

In addition, in the identification phase or step, not only the identity of a POI may be provided to the user but also e.g. a boundary of the POI as well as one or more sub-POIs therein, so that, when crossing the boundary, the user need not be asked as to which sub POI is interesting, when this information already has been provided by the user.

The input device 108 may form part of the display, if this is a touch display. Alternatively or in addition, the input device may be a separate device, such as a touch pad, push buttons, rotatable buttons, tiltable levers, or any combination and any number thereof, such as a keyboard, such as a QWERTY keyboard or a keyboard usual on cell phones. Another type of input device is a device configured to interpret spoken instructions or instructions received from a direction of viewing of a user's eye(s) or a direction of rotation of a user's head or a direction of movement of the user.

The input device may be used for identifying the POI and any sub-POIs therein if desired. This identification may be based on a list of available POIs obtained from the storage unit 104 or from an external source.

The storage 106 may be optional, as the information desired may be obtained from an external source, such as via the antenna 110.

Often, navigators are desired to be functional off-line, whereby a storage 106 is desirable.

The storage may comprise a list of POIs, any group characteristics thereof (gas station, ferry terminal or the like), its position, any sub-POIs therein, characteristics thereof as well as a boundary of the POI. The relevance of the boundary and sub-POIs will be described further below.

The storage 106 may also hold information relating to a map of the surroundings of the POIs and/or the present position of the apparatus, so that a map illustrating the position of the apparatus (locator 106) as well as that of the POI. Also, the storage, as usual navigators, may hold information relating to streets, distances and the like allowing the processor 100 to propose a route from one position to the other, such as from the position of the locator 106 to a selected POI. This is standard navigator operation and will not be described further.

The locator 106 may be based on a number of already known technologies. For outdoor navigation or positioning, standard GPS technology may be used. Alternatively or in addition, triangulation, for example, using other available signals, such as signals from telephone antennas or the like, may be used.

For indoors use, if desired or required, the same or other types of navigation may be used. Localized beacons, local networks or the like may be used indoors in order for a locator 106 to be able to determine its position. Again, a number of technologies are known and this aspect will not be described in further detail.

The change-over from out-door navigation to in-door navigation also is the subject of many articles and will not be described in any detail.

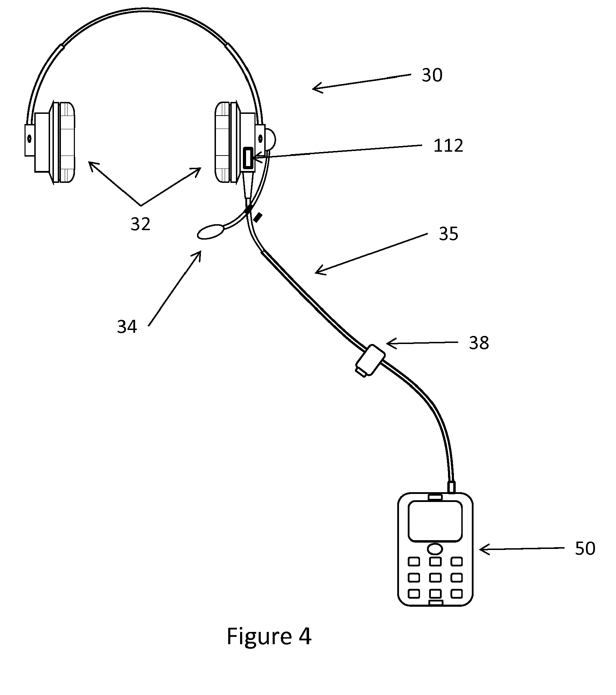

In figure 2, an element 112 is illustrated which may also be used for providing information or instructions for the processor 100. This element 112 may define a direction of viewing or of interest or a field of view/interest, such as if attached to a headset (see figure 4) or other element worn by the user, so that the information provided on the display 102 may be adapted or focused only along the field of view. POIs outside the field of view may not be illustrated, or a part of a map inside the field of view may be made more detailed, highlighted (such as by a higher light intensity, more clear colours or the like) or may be illustrated at a higher zoom rate and thus be allowed to take up a relatively larger part of the display than in the real world.

The processor 100 may be an ASIC, a FPGA or the like. The processor may be software programmable or hardwired and may be a single element or a distributed system of different processors. Also, the storage unit 104 may form part of the processor if desired.

The present invention is now described using two situations.

In one situation, it is desired to visit the old castle in the medieval city center. The medieval city center thus is the POI inside which the old castle is a sub-POI.

The user will enter the medieval city center as the POI in the navigator and will navigate to or toward the medieval city center.

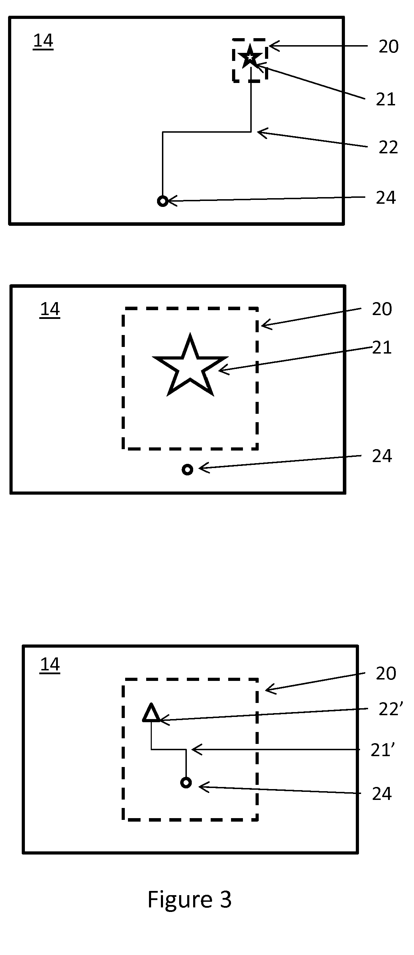

In figure 3A, the POI is indicated on the display 14 at 21, the person's position at 24 and the route by 22. Around the POI is a boundary 20 which may not be visible.

When the user approaches the POI, as is seen in figure 3B, the boundary may become visible or may remain invisible.

When the user crosses the boundary 20, see figure 3C, of the medieval city center, the zoom level changes so that the medieval city center, or the boundary, fills the screen, at the same time the sub-POIs 22' inside the medieval city center become visible.All POIs and preferably all other information outside the boundary areleft out.

The user either now selects the old castle or already has done so and thus now is guided (route 21').

The same effect may be repeated when the user enters the Old Castle, if lower level POIs are provided therein, such as a coronation room. Thus, a boundary may be provided for the old castle or sub-POI 22' and, when the user crosses the boundary, the inner structure of the lower level POI may be revealed and the user guided toward the next level POI.

When the user leaves the Old Castle, the zoom level is again reverted to that of figure 3A.

In another situation, the Smith family is on car holiday in France, they find that they are almost out of diapers. They consult their navigation system for shopping, and find a shopping center nearby. The navigation device shows the shopping center as a POI 21. They navigate to the POI 21, park and enter the shopping-center. Upon entering the shopping center, the boundary thereof is crossed, whereby the display on their navigation device zooms in on the shopping-center and marks individual stores as sub-POIs; figure 3C. The Smiths chose to go to a main supermarket 21'. Once inside the supermarket 21, the boundary thereof is crossed, and product lines show up as lower level POIs and the Smiths quickly find the baby-care line.

In figure 4, another embodiment 30 of the invention is illustrated using sound for guiding the person toward a POI. The embodiment 30 has a headset comprising ear speakers 32, a microphone 34 and a direction sensor 112, as well as a media player 50, a cord or cable 35, and a switch 38.

The media player 50 and the cord 35 with switch 38 need not be provided. The full operation may be provided in the headset if desired. The media player 50 may hold the processor 100, if desired, as well as a battery, a position sensor, memory or the like. The media player may additionally be used for receiving or reading audio information, such as songs or the like, and forward this to the ear speakers 32 for the entertainment of the user.

The full operation and all required elements, however, may be provided in the headset if desired.

The operation of the embodiment 30 is that the direction sensor 112 determines a direction of the headset, and optionally also a position thereof, and that the processor 100 from this information outputs audio information to the ear speakers 32 informing the user of any POIs along the direction of the headset and thus the direction in front of the users head (field of view when the user looks straight ahead).

The processor 100 may determine a width of the field of view, such as 5 degrees or more, such as 10 degrees or more, such as 20 degrees or more, such as 40 degrees or more, such as 60 degrees or more, such as 90 degrees or more, such as 120 degrees or more, such as 150 degrees or more, such as 180 degrees or more.

Also, the processor may determine a maximum distance to POIs in the field of interest/view, such as no more than 50km, such as no more than 10km, such as no more than 1km, such as no more than 100m such as no more than 50m. In some embodiments, a distance of 40-120m is suitable.

These settings may be altered by the user, such as via the microphone 34, the switch 38 and/or the media player.

When the user turns his/her head, a new direction will be determined by the sensor 112, and new POIs may be present within the field of interest, while other POIs now fall outside.

The user may enter instructions either via the microphone 34, the switch 38 and/or the media player for e.g. selecting a POI, where after a route thereto may be determined and the user guided thereto, such as via audio instructions provided to the ear speakers 32.

When the user approaches the POI, any sub-POIs therein are not provided even when these are within the field of interest.

When the user enters the POI or crosses the boundary thereof, the user is informed of any sub-POIs within the field of interest. Now, any POIs outside the boundary are not provided to the user even when these are within the field of interest.

## Claims

1. A method of informing a user of a POI, the method comprising the steps of:
i. the user identifying the POI,
ii. POI information relating to the identified POI being accessed, the information comprising information describing a boundary of the POI and a location of each of one or more sub POI(s) within the boundary,
iii. determining a position of the user,
iv. when the determined position of the user is outside the boundary, providing first information to the user relating to the user's position vis-à-vis the POI,
v. when the determined position of the user is inside the boundary, providing second information to the user relating to the location(s) of the sub POI(s) inside the boundary,
wherein:
- the first information does not comprise information relating to any sub POI(s) and
- the second information does not comprise information relating to any POI(s).

2. A method according to claim 1, wherein step iv. comprises providing information also relating to additional POIs to the user.

3. A method according to claim 1 or 2, wherein step v. and/or step iv comprises providing the information visually on a display.

4. A method according to claim 3, wherein step v. and/or step iv. comprises illustrating, on the display, a map on which is indicated the determined position of the user and the identified POI.

5. A method according to any of the preceding claims, wherein step v. comprises providing the second information as information relating to the determined position of the user vis-à-vis the location(s) of the sub POI(s).

6. A method according to any of the preceding claims, wherein step iv. and/or step v. comprises providing the information in the form of audio information.

7. A method according to any of the preceding claims, further comprising determining a direction of interest, and wherein step iv. and/or step v. comprises providing first and/or second information relating only to POI(s) or sub POI(s) within the field of interest.

8. An apparatus for providing information relating to a POI to a user, the apparatus comprising:
- a storage holding information relating to one or more POIs and, for each POI, a boundary of the POI and a location of each of one or more sub POI(s) within the boundary,
- a position unit configured to determine its position,
- an input device configured to allow the user to select a POI,
- an information provider configured to operate in each of a first and a second mode wherein:
- in the first mode, the determined position is outside the boundary, the information provider providing first information to the user relating to the determined position vis-à-vis the POI, the first information not comprising information relating to any sub POI(s),
- in the second mode, the determined position is inside the boundary, the information provider providing second information to the user relating to the location(s) of the sub POI(s) inside the boundary, the second information not comprising information relating to any POI(s).

9. An apparatus according to claim 8, wherein the information provider is configured to, in the first mode, provide additional information relating to additional POIs to the user.

10. An apparatus according to claim 8 or 9, wherein the information provider comprises a display, wherein the information provider is configured to, in the first mode, provide the first information visually on the display.

11. An apparatus according to claim 10, wherein the information provider is configured to, in the first mode, illustrate, on the display, a map on which is indicated the determined position and the identified POI.

12. An apparatus according to any of claims 8-11, wherein the information provider is configured to provide the first and/or second information as audio information.

13. An apparatus according to any of claims 8-11, wherein the information provider is configured to, in the second mode, provide the second information as information relating to the determined position vis-à-vis the location(s) of the sub POI(s).

14. An apparatus according to any of claims 8-13, further comprising a sensor for determining a field of interest, and wherein the information provider is configured to provide first and/or second information relating to POI(s) and sub POI(s) within the field of interest.
